(19) Europäisches Patentamt
European Patent Office
Office européen des brevets

(11) **EP 3 346 445 B1**

(12) **EUROPEAN PATENT SPECIFICATION**

(45) Date of publication and mention
of the grant of the patent:
**10.11.2021 Bulletin 2021/45**

(51) Int Cl.:
***G06T 7/215*** [(2017.01)]  ***G06T 7/269*** [(2017.01)]

(21) Application number: **17305012.1**

(22) Date of filing: **05.01.2017**

(54) **METHODS AND DEVICES FOR EXTRACTING AN OBJECT FROM A VIDEO SEQUENCE**

VERFAHREN UND VORRICHTUNGEN ZUR EXTRAKTION EINES OBJEKTS IN VIDEOSEQUENZEN

PROCEDES ET DISPOSITIFS POUR L'EXTRACTION D'OBJET DANS DES SEQUENCES VIDEO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.07.2018 Bulletin 2018/28**

(73) Proprietors:
• **Université de Toulon
83130 La Garde (FR)**
• **Centre National de la Recherche Scientifique
75016 Paris (FR)**
• **Université d'Aix Marseille
13007 Marseille 7 (FR)**

(72) Inventors:
• **BOUCHARA, Frédéric
83000 Toulon (FR)**
• **LELORE, Thibault
13001 Marseille (FR)**
• **BECHAR, Ikhlef
83000 Toulon (FR)**

(74) Representative: **Marks & Clerk France
Immeuble "Visium"
22, avenue Aristide Briand
94117 Arcueil Cedex (FR)**

(56) References cited:
• **BECHAR I ET AL: "Object segmentation from a dynamic background using a pixelwise rigidity criterion and application to maritime target recognition", 2014 IEEE INTERNATIONAL CONFERENCE ON IMAGE PROCESSING (ICIP), IEEE, 27 October 2014 (2014-10-27), pages 363-367, XP032966617, DOI: 10.1109/ICIP.2014.7025072 [retrieved on 2015-01-28]**
• **PRASAD D K ET AL: "Video Processing from Electro-optical Sensors for Object Detection and Tracking in Maritime Environment: A Survey", ARXIV.ORG, CORNELL UNIVERSITY LIBRARY, 201 OLIN LIBRARY CORNELL UNIVERSITY ITHACA, NY 14853, 17 November 2016 (2016-11-17), XP080732620,**

**Description**

**TECHNICAL FIELD**

The invention generally relates to video processing and in particular to a method and a device of extracting a target object from a video comprising at least a chronological image sequence representing an environment, such as a maritime environment.

**BACKGROUND**

Maritime video-surveillance is used in numerous civilian and military applications such as for maritime security (e.g. for securing sea coasts and prevention of fraudulent maritime activities such as smuggling, thefts, piracy, intrusions, and human trafficking), navigation, environmental control, rescue operations, and monitoring of maritime traffic.

Video-based maritime surveillance relies on the analysis and processing of images and videos acquired for monitoring maritime regions or maritime scenes in a maritime environment and possibly detecting and tracking foreign objects moving in the water. Exemplary maritime scenes comprise seas and oceans. Exemplary foreign objects comprise swimmers, debris and rigid objects such as boats. The used video/image processing systems may be automatic or semi-automatic requiring a user intervention.

Video and image processing-based maritime surveillance is challenging due to the high (degree of) unpredictability of the maritime environment. Main difficulties are related to the subtraction of the background, i.e. distinguishing which part of a given image describes the background and which part describes one or more particular target objects. Various uncertainty sources pose such challenges.

Some uncertainty sources are related to the dynamic and cluttered background which may comprise waves, water ripples, wakes, and solar reflections. Such effects may introduce noise in the acquired and processed images hiding foreign objects and resulting in the failure of the detection and/or the tracking task of target objects.

Some other uncertainty sources are related to the unavailability of a-priori information concerning foreign objects. For examples, the shape, the size or the orientation of some foreign objects may be unknown in advance by the system user. In addition, the dynamic motion of some foreign objects may introduce additional constraints for realizing their real-time tracking.

Other uncertainty sources are related to the imperfections of the video or image-acquiring system resulting for example from the motion of the video or image acquisition tools (cameras).

Moreover, actual video acquisition technologies and video processing techniques generate huge volumes of video data that need to be efficiently and in near real-time processed in order to achieve a satisfactory video-based maritime surveillance. Meeting such goals requires the development of near real-time solutions to image processing-based objects detection, recognition, and tracking as well as event recognition adapted to the highly unpredictable maritime environments.

Some existing video-based maritime surveillance systems are based on static cameras. Such systems use objects segmentation techniques that have been designed for Gaussian-like environments such as indoor or controlled outdoor scenes. These techniques comprise:

- background subtraction techniques disclosed in "C. Stauffer, W. E. L. Grimson, Learning Patterns of Activity Using Real-Time Tracking, IEEE Transactions on Pattern Analysis and Machine Intelligence volume 22, issue 8, pages, 747—757, 1999";

- multi-hypothesis framework disclosed in "S. Fefilatyev, D. B. Goldgof, C. Lembke, Tracking Ships From Fast Moving Camera Through Image Registration, in Proceedings of the IEEE International Conference on Pattern Recognition, pages 3500—3503, 2010"

- statistical learning techniques disclosed for example in "D. Bloisi, L. Iocchi, ARGOS-A Video Surveillance System for Boat Traffic Monitoring in Venice, International Journal of Pattern Recognition and Artificial Intelligence, volume 23, issue 7, pages 1477—1502, 2009".

Since the maritime environments are non-Gaussian and are highly unpredictable, such solutions may not achieve good performances when applied for monitoring maritime environments.

The uncertainty due to the dynamic background was recently addressed and disclosed in:

- "Bechar I et al., Object segmentation from a dynamic background using a pixel-wise rigidity criterion and application to maritime target recognition, IEEE International Conference on Image Processing (ICIP), 27 October, pages 363-367";

- "Prasad D K et al., Video Processing from Electro-optical Sensors for Object Detection and Tracking in Maritime Environment: A Survey, ARXIV.ORG, CORNELL UNIVERSITY LIBRARY, 201 OLIN LIBRARY CORNELL UNIVERSITY ITHACA, NY 14853, 17 November 2016 (2016-11-17)";

- "R. Vidal, A. Ravichandran, Optical Flow Estimation Segmentation of Multiple Moving Dynamic Textures, in Proceedings of IEEE Computer Society Conference on Computer Vision and Pattern Recognition, Volume 2, pages 516—521, 2005";

- "V. Mahadevan, N. Vasconcelos, Background Subtraction in Highly Dynamic Scenes, in Proceedings of IEE Computer Society Conference on Computer Vision and Pattern Recognition, pages 1-6, 2008";

- "A. Chan, V. Mahadevan, N. Vasconcelos, Generalized Stauffer-Grimson Background Subtraction for Dynamic Scenes, Machine Vision and Applications Volume 22, Issue 5, pages 751—766, 2011".

Some other video-surveillance systems propose to overcome the system's uncertainty by performing a fusion of the image data acquired using various image/video acquisition tools (sensors, cameras, radars, satellites).

An example of a fusion of radar and automatic identification system (AIS) data is disclosed in "B. J. Rhodes et al., Seacoast: Persistent Surveillance and Automated Scene Understanding for Ports and Coastal Areas, In Proceedings of SPIE 6578, Defense Transformation and Net-Centric Systems, 2007".

An example of infrared-based imagery monitoring is disclosed in "A. Smith, M. Teal, Identification and Tracking of Marine Objects in Near-infrared Image Sequences for Collision Avoidance, in Proceedings of IEE Conference on Image Processing and its Applications, pages 250—254, 1999".

In still another example, a fusion of visible light data and thermal infrared data was disclosed in "I. Bechar, T. Lelore, F. Bouchara, V. Guis, M. Grimaldi, Toward an Airborne System for Near Real-Time Maritime Video-surveillance based on Synchronous Visible Light and Thermal Infrared Video Information Fusion: an Active Contour Approach, in Proceedings of The Ocean and Coastal Observation Sensors and Observing Systems, Numerical Models and Information Systems Conference, 2013". Such a technique enables the coverage of a large area of a monitored seacoast while providing reliable performances. However, this technique requires the deployment of heavy and very expensive hardware that may be unaffordable to several maritime surveillance companies.

## SUMMARY

In order to address these and other problems, there is provided a computer-implemented method for extracting a target object from a video comprising at least a chronological image sequence. The motion of the target object across the chronological image sequence is represented by a predefined motion model. The motion model is associated with a set of motion parameters corresponding to the motion of the target object between two images of the sequence. The method comprises selecting pairs of successive images in the chronological image sequence, each pair comprising a first image and a second image and being associated with values of the set of motion parameters and with an optical flow vector representing the displacement of the pixels between the first image and the second image of the pair of images. The method comprises determining for each selected pair of images an extraction map, each component of the extraction map corresponding to a pixel of the second image of the selected pair of images and being assigned a binary value. The extraction map for a given pair of images is determined according to the minimization of a function that depends on the values of the set of motion parameters and the optical flow vectors associated with the given pair of images and with the previous pairs of images in the chronological image sequence. The method further comprises, in response to the verification of a termination condition, extracting the target object from the extraction map associated with a selected pair of images.

The termination condition comprises checking if a predefined performance criterion is satisfied.

In some embodiments, each image in the chronological image sequence may be associated with an image domain, the image domain comprising pixels associated with the target object and pixels associated with a background. Each pixel may have a value, the location of a pixel in a given image domain being represented by a set of coordinates, the set of coordinates comprising three real values.

According to some embodiments, the predefined motion model may correspond to the application of a transformation operation to each set of coordinates representing a pixel associated with the target object.

In some embodiments, the optical flow vector associated with a given pair of images may comprise a set of values, each value representing the displacement distance of a pixel between the first image and the second image, the set of values being determined by applying an optical flow estimation algorithm.

According to some embodiments, the values of the set of motion parameters associated with a given pair of images may be determined according to the minimization of an additional function by applying a gradient descent algorithm.

In some embodiments, the chronological image sequence may comprise an initial image $I_0$ corresponding to a time instant $t = 0$, the additional function being determined by summing a pixel-wise term over at least a part of the pixels comprised in the image domain associated with the given pair of images, the pixel-wise term comprising, for a given pixel located at a given location in the image domain, the product between:

- the value of the pixel comprised at the given location in the extraction map determined for a previously selected pair of images, and
- the absolute value of the difference between the value of the pixel comprised in the initial image at the given location and the value of a second pixel comprised in the second image of the given pair of images, the set of coordinates representing the location of the second pixel being determined by applying the transformation to the set of coordinates of the given pixel.

In some embodiments, the method may further comprise determining, for each selected pair of images, a value of the standard deviation of a noise associated with the motion model.

In one embodiment, the function for each selected pair of images may further depend on the value of the standard deviation.

In some embodiments, each component of the extraction map corresponding to a pixel associated with the target object may be assigned a binary value equal to one and each component of the extraction map corresponding to a pixel associated with the background may be assigned a binary value equal to zero.

In some embodiments, the termination condition may comprise checking if all images in the chronological image sequence have been processed in the selected pairs of images.

According to some embodiments, the transformation operation may be based on at least one affine transformation, each affine transformation being chosen in a group consisting of a translation, a rotation, a scaling, a homothety, a reflection, a rotation, a shear mapping, and a similarity transformation.

In one embodiment, the transformation operation may be a similarity transformation, the set of motion parameters comprising a scaling coefficient, a rotation angle, and two translation coefficients.

There is also provided a device for extracting a target object from a video comprising at least a chronological image sequence. The motion of the target object across the chronological image sequence is represented by a predefined motion model. The motion model is associated with a set of motion parameters corresponding to the motion of the target object between two images of the sequence. The device is configured to select pairs of successive images in the chronological image sequence, each pair comprising a first image and a second image and being associated with values of the set of motion parameters and with an optical flow vector representing the displacement of the pixels between the first image and the second image of the pair of images. The device comprises video processing peripherals (25) configured to determine for each selected pair of images an extraction map, each component of the extraction map corresponding to a pixel of the second image of the selected pair of images and being assigned a binary value, the extraction map for a given pair of images being determined according to the minimization of a function that depends on the values of the set of motion parameters and the optical flow vectors associated with the given pair of images and with the previous pairs of images in the chronological image sequence. The video processing peripherals (25) are further configured to extract the target object from the extraction map associated with a selected pair of images in response to the verification of a termination condition, wherein the termination condition comprises checking if a predefined performance criterion is satisfied.

There is further provided a video processing system for extracting a target object from a video comprising at least a chronological image sequence, the video processing system comprising image acquisition peripherals configured to acquire the chronological image sequence and the device configured to extract the target object according to the preceding features.

Advantageously, embodiments of the invention provide robust and accurate incremental object segmentation techniques relying on an iterative combination of the compensation of the motion model of a target object and object segmentation.

Embodiments of the invention further provide real-time object segmentation for real-time detection and monitoring of target objects in environments such as maritime environments achieving required performances in terms of robustness to noise and varying environmental (e.g. weather) and video acquisition conditions.

The method for extracting a target object can be advantageously processed simultaneously, thereby resulting in improvements in terms of hardware implementation complexity and cost as well as of computational speed.

Further advantages of the present invention will become clear to the skilled person upon examination of the drawings and the detailed description.

## BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, illustrate some embodiments of the invention.

Figure 1 illustrates an exemplary application of the invention to maritime video surveillance;

Figure 2 is a schematic diagram of a video surveillance system implementing the various embodiments of the invention;

Figure 3 is a flowchart illustrating a method for segmentation of a target object in a sequence of images according to some embodiments of the invention.

Figure 4 illustrates the construction of an auxiliary energy map according to some embodiments of the invention;

Figure 5 exemplifies the iterative construction of an extraction map according to some embodiments of the invention in which the target object is a bottle;

Figure 6 exemplifies the iterative construction of an extraction map according to some embodiments of the invention in which the target object is a boat;

Figure 7 exemplifies the iterative construction of an extraction map according to some embodiments of the invention in which the target object is a boat;

Figure 8 is a table illustrating the performances of the segmentation method according to some embodiments of the invention in terms of the F1-score, the False Positive Rate and the True Positive Rate;

Figure 9 is a diagram depicting the performances of the segmentation method in terms of the True Positive Rate and the False Positive Rate according to some embodiments of the invention in which the target object is a bottle;

Figure 10 is a diagram depicting the performances of the segmentation method in terms of the True Positive Rate and the False Positive Rate according to some embodiments of the invention in which the target object is a boat.

Figure 11 is a diagram depicting the performances of the segmentation method in terms of the True Positive Rate and the False Positive Rate according to some embodiments of the invention in which the target object is a boat.

Figure 12 illustrates an iterative construction of the extraction map according to some embodiments of the invention; and

Figure 13 represents two histograms of the accumulated energy map obtained according to some embodiments of the invention.

## DETAILED DESCRIPTION

Embodiments of the present invention provide, alone or in combination, methods, devices and computer program products for extracting a target object from a video comprising at least a chronological image sequence. The chronological image sequence comprises at least two successive images extracted from an acquired video of a target region in a specific environment. The target object appears on a background in the image sequence. One or both of the target object and the background are moving. Embodiments of the present invention provide efficient, robust and real-time iterative object segmentation techniques based on a motion model iterative compensation for extracting the target object from the video in the form of an extraction map. The various embodiments enable the extraction of information related to the target object from the determined extraction map.

Methods, devices and computer program products according to the various embodiments of the invention may be implemented in video and image processing systems applied to a wide variety of civilian and military computer vision-based applications. Exemplary applications comprise, without limitation, video-surveillance such as maritime video-surveillance and medical imaging.

In maritime video-surveillance applications, target object extraction techniques according to the various embodiments of the invention may be implemented in maritime video processing systems and devices. The various techniques may accordingly be used to locate, recognize and/or track a target object evolving in a maritime scene for the purpose of the surveillance and security control of a target region in a maritime environment.

In medical imaging applications, target object extraction techniques according to some embodiments of the invention may be integrated in image processing systems used in medicine for example to locate tumors and other pathologies in medical image data or to the diagnosis, study of anatomical structure, and intra-surgery navigation.

The following description of some embodiments of the invention will be made with reference to video processing systems used in maritime video surveillance applications, for illustration purpose only. However, the skilled person will readily understand that the various embodiments of the invention may be integrated in any video or image processing system used for different applications.

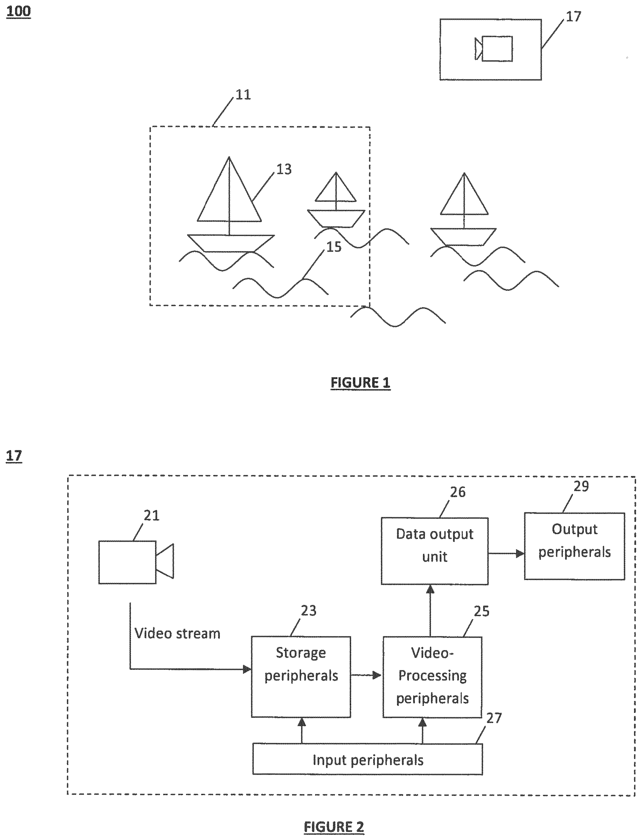

Figure 1 illustrates an exemplary application of the invention for the video-surveillance, inspection and tracking of a target region 11 in a maritime environment 100. Exemplary maritime environments 100 comprise oceans, seas, rivers, lakes, dams, beaches and borders.

According to some embodiments, the maritime target region 11 may comprise one or more target objects 13 (hereinafter referred to as 'foreground') as well as outlier objects 15 (hereinafter referred to as 'background').

Exemplary target objects 13 may comprise debris, objects, swimmers, intruders, boats, maritime platforms, and offshore equipments.

The background 15 may comprise water, the sky, foam, birds, humans, waves, and any object different from the target object(s) 13.

Methods, devices and computer program products according to the various embodiments of the invention may be implemented in a video-surveillance system 17 used to ensure a real-time inspection of the target region 11 by providing an automatic and real-time extraction of the target object 13 while it is moving in the target region 11. In particular, methods, devices, and computer program products according to the various embodiments of the invention enable the extraction of moving target object(s) 13 from a moving background 15. The extraction of the target object(s) 13 may enable the detection/tracking/alarm of threats/events/foreign objects.

Figure 2 is a schematic video-surveillance system 17 in which the various embodiments of the invention may be implemented for monitoring a maritime target region 11.

According to one application of the present invention, the video-surveillance system 17 may be an airborne system operating for example inside a surveillance aircraft (not shown in figure 2). Exemplary video-surveillance systems 17 comprise airborne computers, laptops, and smart-phones equipped with processing capabilities for executing required instructions to run algorithms according to the various embodiments of the invention.

The video-surveillance system 17 may comprise video acquisition means 21 configured to acquire video streams of the maritime target region 11.

According to some embodiments, the video acquisition means 21 may be configured to acquire video streams in the visible light spectrum. The visible light spectrum comprises the electromagnetic radiations visible to the human eye and having wavelengths in the range of 400-700 nanometers. An acquired visible light video/image stream consists accordingly of colors in the three RGB bands (red, green, and blue).

Exemplary visible light video acquisition means 21 comprise any visible light sensors configured to perform a remote sensing, any imaging spectrometer instruments configured to acquire spectrally-resolved images of the target region 11 or any RGB cameras configured to record video streams in the visible light spectrum.

The video-surveillance system 17 may comprise storage peripherals 23 configured to receive and store the acquired video streams. Storage peripherals 23 may comprise random access memory means (RAM) or read-only memory means.

The video-surveillance system 17 may further comprise video processing peripherals 25 configured to receive video data from the storage peripherals 23 and to process the received video streams on board and in near-real time. The video processing peripherals 25 may comprise automated processing peripherals configured to implement and execute the corresponding instructions to run the methods and algorithms according to the various embodiments of the invention. The video processing peripherals 25 may comprise filtering means (not shown in figure 2) configured to preprocess the received video streams for filtering out disturbances and noise. The video processing peripherals 25 may further comprise processing means (not shown in figure 2) configured to extract a chronological image sequence comprising at least two successive images (hereinafter referred to as 'video frames') to be used during the iterative implementation of the target object extraction method. Exemplary video processing peripherals 25 comprise microprocessors (CPU) such as FPGA or ASIC.

The output from the video processing peripherals 25 may provide information related to the target objects 13 that allows performing required tasks for an efficient and robust real-time monitoring and inspection of the maritime target region 11. The video-surveillance system 17 may accordingly comprise an output data unit 26 configured to output the processed data from the video processing peripherals 25 such as the extraction map derived from the processing of the input video sequence. Such provided output may be used for example to track the maritime target region 11, to control the movement of the video acquisition means 21 or to trigger a threat detection alarm in case of the detection of intrusion event and/or object in the maritime target region 11.

The video-surveillance system 17 may further comprise input peripherals 27 and output peripherals 29 for ensuring a human-machine interaction enabling to control the execution of the various instructions according to the various embodiments of the invention and the analysis of the maritime target region 11 at the human level. Input peripherals 27 may comprise a keyboard and a mouse used for example to enter configuration settings (e.g. designation of the target objects). Output peripherals 29 may comprise communication means such as displays enabling a man-to-machine communication for example in the form of a graphical user interface to visualize on a screen the acquired video stream or the outputs of the video processing peripherals 25.

The various embodiments of the invention provide, in this example of video maritime surveillance, methods implemented in video processing peripherals and systems enabling to extract a moving target object 13 in a maritime target region from a video sequence comprising a moving background 15. In particular, the various embodiments provide an optimized determination of an extraction map representation in which a moving target object 13 is extracted from a moving background 15. An extraction map comprises accordingly a set of pixels associated with the target object 13 and a set of pixels associated with the background 15.

In such embodiments, the motion of the target object across the chronological image sequence may be represented by a motion model. The motion model may be associated with a set of motion parameters corresponding to the motion of the target object between two images in the image sequence.

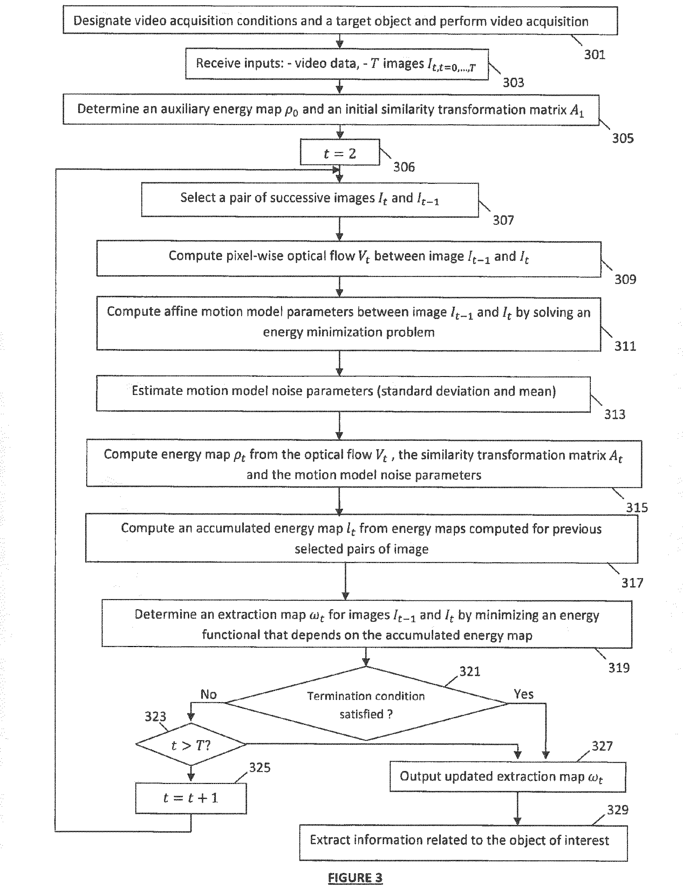

Figure 3 is a flowchart illustrating a method of the extraction of a moving target object 13 appearing on a moving background 15 in a target region 11 in a maritime environment according to some embodiments of the invention in which an airborne video-surveillance system 17 is used.

Target object extraction according to the various embodiments of the invention is based on the analysis and processing of at least a chronological image sequence comprising at least two successive images extracted from an acquired video of the target region 11. The successive images correspond to 3D scenes of the maritime target region 11 in which at least the target object 13 and the background 15 as well as the camera may be moving. The motion of the target object 13 across the chronological image sequence is represented by a predefined motion model. The various embodiments of the present invention provide target object extraction methods based on iterative segmentation techniques that rely on an iterative compensation of the predefined motion model for separating the target object from the background in the form of an extraction map.

According to some embodiments, the target object extraction method may be based on the analysis and processing of a chronological image sequence extracted from an acquired visible light video stream of the maritime target region 11.

The following description of some embodiments of the invention will be made with reference to visible light video streams, for illustration purpose only. However, the skilled person will readily understand that the various embodiments may be applied to other types of streams such as binary-color video or image streams.

Step 301 may be performed to designate the video acquisition conditions, designate a target object 13 denoted by $\Gamma$, and perform video acquisition.

According to some embodiments, a target object 13 as well as a target region 11 may be chosen automatically for example via a Radar-based system.

In other embodiments, the target object 11 may be chosen manually upon an explicit request by a human operator for observation during a certain period of time in the purpose of extracting useful information for target object recognition and/or identification task.

According to some embodiments, the target object 11 may be selected according to a number of constraints in order to minimize the complexity of the tracking tasks. Such constraints may comprise constraints related to:

- the number of objects of interest extracted simultaneously: a single target object 11 may be selected to be extracted at a same time from an acquired video;

- the size of the target object: a target object 13 may be selected such that it has a size of at least 10% the size of the target region 11 captured in each image comprised in the chronological image sequence;

- the rigidity of the target object: the selected target object 13 may be rigid (i.e. non-deformable);

- the motion of the target object and the background: the target object 13 may be selected such that it undergoes a different motion model than the background (e.g. the target object 13 may have a rigid motion model while the background may have a random or piece-wise coherent motion model) or both the target object 13 and the background may have a same motion model but distinct velocities.

Given the designated target object 13 and the specified video acquisition conditions/constraints, video acquisition may be then performed to capture the target region 11 comprising the designated target object 13.

According to some embodiments in which an airborne video-surveillance system is used, video acquisition may be performed using airborne video acquisition means.

In particular, video acquisition may be performed using visible light airborne video acquisition means such as RGB cameras. In such embodiments, in addition to the rigid motion of the target object 13 and the dynamic background, the airborne camera may be also moving.

The acquired videos may be then stored in storage peripherals of an airborne video surveillance system.

Step 303 may be performed to receive acquired video streams of the designated target region 11 and extract from the received video data a chronological image sequence comprising at least two successive images.

The number of images extracted from the received video data may depend on the length of the video stream and the temporal spacing between each two successive images.

According to some embodiments, the temporal spacing between any two successive images may be chosen such that the motion of the target object 13 from one image to another is significant.

The extracted sequence of images may be denoted by $\{I_t; t = 0, ..., T\}$ with $T$ designating the total duration of an acquired video stream from which is extracted the chronological image sequence. Each image in the extracted chronological image sequence corresponds to a time instant. For all $t = 0, ..., T$, $I_t$ stands for the $t^{th}$ image or video-frame which corresponds to the time instant $t$. In particular, $I_0$ is referred to as the initial image defined as the first extracted image from the received video data and corresponds to the initial time instant $t = 0$.

In the following description, time-dependent variables expressed using the temporal script $t$ refer to the image $I_t$.

Images in the set $\{I_t; t = 0, ..., T\}$ may be associated with a same image domain denoted by $\Omega$.

The image domain $\Omega$ comprises a plurality of pixels (hereinafter referred to as 'points'). Each pixel is a sample of the image. The number of pixels in an image refers to the resolution of the image. The plurality of pixels may comprise a set of pixels associated with the target object 13 and a set of pixels associated with the background. The pixels describing the target object 13 may represent the domain in the image denoted by $\Omega_t$ and corresponding to the target region 11.

Each pixel has a value. In particular, for color images using the RGB colorspace, the pixel value may be a vector of three numbers, associated each to the red, green, and blue color.

Using a regular two-dimensional grid arrangement in the 2D plane, any pixel in a given image may be represented by a couple of Euclidean plane coordinates denoted by $(x, y)$. In other words, the location of a given pixel in a given image may be represented by the Euclidean plane coordinates $(x, y)$.

The successive extracted images in the chronological image sequence are 2D images which correspond to 3D scenes of the maritime target region 11. Each 2D image $I_t$ corresponds to a 3D scene of the maritime target region 11 acquired at time instant $t$. Accordingly and referring to projective geometry, each 2D image represents a projective space in $R^2$ (of dimension 2, i.e. projective plane) obtained by the projection of the 3D vector space $R^3$ associated with the 3D scenes. Accordingly, any 3D point in the 3D vector space representing the maritime 3D scene in time instant $t$ is projected onto a point in the image $I_t$.

Based on this definition of images as projective spaces, any pixel in a given image may be represented by a finite set of coordinates termed 'projective' or 'homogeneous' coordinates. The set of homogeneous coordinates comprises three values denoted by $(u, v, w)$. The homogeneous coordinates of a given pixel in a 2D image may be determined using its couple of Euclidean plane coordinates $(x, y)$. More specifically, given a pixel of Euclidean plane coordinates $(x, y)$, for any non-zero number $z$, the triple $(x * z, y * z, z)$ represents a set of homogeneous coordinates for the given pixel, with '*' designating a multiplication operator. By this definition, multiplying the three homogeneous coordinates by a common non-zero coefficient gives a new set of homogeneous coordinates for the same point. In particular, $(u, v, w) = (x, y, 1)$ is a system of homogeneous coordinates for the pixel of Euclidean plane coordinates $(x, y)$. This means that in addition to the Euclidean plane coordinates, the location of a given pixel in a given image may be represented by the set of homogeneous coordinates which comprise three real values.

For simplicity and without loss of generality, the following description will be made with reference to a system of homogeneous coordinates in the form $(x, y, 1)$. However, the skilled person will readily understand that any set of homogeneous coordinates, obtained for instance by scaling these coordinates by a same non-zero coefficient, can be used.

The target object 13 may undergo, at each time instant, a rigid motion. The motion of the target object 13 across the chronological image sequence is represented by a predefined motion model. In particular, the motion model is associated with a set of motion parameters corresponding to the motion of the target object 13 between each two images $I_{t-1}$ and $I_t$ of the chronological image sequence.

Considering each image as a set of pixels, the motion of the target object 13 between two successive images $I_{t-1}$ and $I_t$ corresponds to the application of a transformation operation to the pixels comprised in image $I_{t-1}$. More precisely, the motion of the target object 13 between two successive images may correspond to the application of a transformation operation to the coordinates defining the locations of the pixels in the image $I_{t-1}$.

Based on the definition of each image as a projective space obtained by the projection of the 3D vector space, such a transformation operation can be seen as a projective transformation (also referred to as 'homography') which is an isomorphism of the projective spaces corresponding to the successive images $I_{t-1}$ and $I_t$. This isomorphism of projective spaces is induced by an isomorphism of the 3D vector spaces of the two 3D scenes captured in instants $t - 1$ and t and from which the images $I_{t-1}$ and $I_t$ are derived.

According to some embodiments, the projective transformation may be a linear transformation having 8 degrees of freedom.

According to some embodiments in which the predefined motion model of the target object 13 is an affine motion model, the projective transformation operation may be based on at least one affine transformation. Each affine transformation may be chosen in a group consisting of a translation, a rotation, a scaling, a homothety, a reflection, a shear mapping, and a similarity transformation. In such embodiments, the set of motion parameters may comprise:

- a translation vector for a translation transformation;

- a rotation angle for a rotation transformation;

- a scaling coefficient for a scaling transformation;

- a scaling coefficient and a translation vector for a homothety transformation;

- a reflection angle for a reflection transformation;

- a shear factor for a shear mapping; and

- a scaling coefficient, a rotation angle, and a translation 2D vector for a similarity transformation.

In particular, two objects obtained using similarity transformations have the same shape (or one has the same shape as the mirror image of the other). More precisely, one can be obtained from the other by uniformly scaling (enlarging or shrinking), possibly with additional translation, rotation, and reflection. A similarity transformation permits translation (i.e. change of position), rotation, and scale.

Using the homogeneous coordinates, a projective transformation can be easily represented by a matrix. In particular, a similarity transformation can be represented by a 3x3 matrix given by:

$$A = \begin{pmatrix} s.\cos(\alpha) & -s.\sin(\alpha) & k \\ s.\sin(\alpha) & s.\cos(\alpha) & h \\ 0 & 0 & 1 \end{pmatrix} \qquad (1)$$

In equation (1):

- $\alpha$ represents the rotation angle of the similarity transformation;

- $s$ represents the scaling coefficient of the similarity transformation; and

- $(k, h)$ denotes the translation vector of the similarity transformation.

Using the matrix representation of affine transformations and the homogeneous coordinates, a pixel comprised in the initial image $I_0$ at a location given by the set of homogeneous coordinates $p_0 = (x_0, y_0, 1)$ may be projected/transformed, during the motion of the target object 13, onto a pixel comprised in image $I_t$ at a location given by the set of homogeneous coordinates $p_t = (x_t, y_t, 1)$ such that $p_0 = A_t p_t$ with $A_t$ being a 3x3 matrix representing the transformation modeling the motion of the target object between images $I_0$ and $I_t$.

Using the matrix representation of the motion of pixels between images $I_0$ and $I_t$, a matrix denoted by $B_t$ may be associated to each pair of successive images $(I_{t-1}, I_t)$. It corresponds to the transformation representing the relative motion of the target object 13 between the images $I_{t-1}$ and $I_t$ and given by $B_t = A_{t-1}^{-1} A_t$ .

The following description will be made with reference to a rigid motion model represented by a similarity transformation, for illustration purpose only. However, the skilled person will readily understand that the motion model of the target object 13 may be represented by any rigid or affine transformation.

Accordingly, the similarity transformation associated to the images $I_{t-1}$ and $I_t$ may be represented by a 3x3 matrix denoted by $A_t$ of expression given by equation (1) with the unknown real-value set of motion parameters $\alpha_t$, $s_t$ and ($k_t$, $h_t$) which designate respectively the rotation angle, the scaling coefficient and the translation vector of the similarity transformation $A_t$. The motion model associated with the pair of successive images ($I_{t-1}$, $I_t$) is accordingly represented by the corresponding 3x3 similarity matrix $B_t = A_{t-1}^{-1} A_t$.

Given the predefined motion model, the extraction of the target object 13 is based on an iterative construction of an extraction map denoted by $\omega$. The extraction map is a binary representation comprising components encoded each in one-bit. An extraction map constructed by processing a selected pair of successive images ($I_{t-1}$, $I_t$) is denoted by $\omega_t$. The construction of the extraction map provides a pixel-wise evaluation of whether particular pixels in each image are part of the pixels describing the foreground or are part of the pixels describing the background. The extraction map enables to decide which pixels in each image belong to the target object 13.

According to some embodiments, the construction of the extraction map may be pixel-wise, evaluating the pixels one-by-one.

According to other embodiments in application to non pixel-wise evaluation, the construction of the extraction map may be performed by making the decision for pairs or groups of pixels.

Accordingly, the extraction map may be seen as a binary representation of the received source images comprised in the chronological image sequence in which each pixel is assigned with a predefined binary value indicating whether this pixel describes the target object of the background.

According to some embodiments, the predefined binary value assigned to a pixel describing the target object 13 may be equal to one ('1') and the predefined binary value assigned to a pixel describing the background may be equal to zero ('0'). Accordingly, an extraction map $\omega_t$ constructed by processing a selected pair of images ($I_{t-1}$, $I_t$) may be given by:

$$\omega_t(p_t) = \begin{cases} 1, if\, p_t \in \Omega_\Gamma \\ 0, otherwise \end{cases} \tag{2}$$

The extraction map construction or image segmentation enables the elimination of useless information while preserving information related to the target object. The quality of the determined extraction map may be affected by noise. The presence of noise may take different forms such as speckling, reflections, shadows, or blurring.

According to some embodiments, the quality of the image representations may be improved by the optional use of a filtering step (not shown in figure 3). A Wiener filter may be used to implement this step.

The iterative construction of the extraction map is based on an iterative compensation of the unknown real-value set of motion parameters corresponding to the motion of the target object between the various extracted images according to a global energy minimization framework. The construction of an extraction map for each selected pair of images may be based on the minimization of a function that depends on the values of the set of motion parameters and the optical flow vectors associated with the selected pair of images and with the previous pairs of images in the chronological image sequence. Steps 307 to 319 may be performed to iteratively construct an energy map and an extraction map for each selected pair of images.

An energy map denoted by $\rho_t$ constructed by processing the pair of images ($I_{t-1}$, $I_t$) comprises a value $\rho_t(p_t)$ associated with each pixel comprised in the image domain $\Omega$ at location represented by the set of homogeneous coordinates $p_t = (x_t, y_t, 1)$. The construction of an energy map $\rho_t$ of index t may accordingly consist in computing the values $\rho_t(p_t)$ for each pixel comprised in the image domain $\Omega$.

Prior to the iterative process, step 305 may be performed to determine an auxiliary energy map denoted by $\rho_0$ and to determine an initial similarity transformation matrix denoted by $A_1$.

The construction of the auxiliary energy map $\rho_0$ may be based on the a-prior knowledge of the rigidity of the target object 13 through a full video stream. The auxiliary energy map $\rho_0$ may accordingly be determined using epipolar geometry techniques for the detection of a rigid motion in a video sequence. More specifically, the values of the energy map $\rho_0(p_0)$ may be determined from an initial set of points obtained through a matching between the initial image $I_0$ and an auxiliary image denoted by $I_{-\delta t}$ previously extracted from a previously acquired video sequence. The auxiliary image $I_{-\delta t}$ may be retrieved from storage peripherals 23. The auxiliary image $I_{-\delta t}$ may correspond to an image extracted from a video stream acquired at time instant $t - \delta t$ with $\delta t$ being big enough to have a significant pixel-wise motion.

Advantageously, the temporal spacing $\delta t$ may be equal to 10, providing a good complexity/performance tradeoff.

The determined initial set of points may be then matched and filtered according to epipolar constraints. The matched points that respect epipolar constraints may be used to construct the auxiliary energy map $\rho_0$ according to the rule given by:

$$\rho_0(p_0) = \begin{cases} 0\, if\, p_0 \in N(P) \\ \mu\, else \end{cases} \qquad (3)$$

In conditional equation (3), $\mu$ designates a constant that may be advantageously equal to 3, $P$ designates the set of pixels associated with the foreground comprised in the determined initial set of points, and $N(.)$ designates any neighborhood function that may be advantageously a circular function of radius $r = 9$.

According to some embodiments, the matching and filtering for checking epipolar constraints may be performed using the RANSAC algorithm, familiar to the skilled person in the art. Details about the RANSAC algorithm can be found in "G.Wolberg, S. Zokai, Robust image registration using log-polar transform, in Proceedings of the International Conference on Image Processing, volume 1, pages 493-496, 2000".

Step 306 may be performed to initialize the temporal index $t$ to $t = 2$ for starting by processing the pair of images $(I_{t-1}, I_t) = (I_1, I_2)$.

Step 307 may be performed to select a pair $(I_{t-1}, I_t)$ of successive images among the chronological image sequence. The selected pair of images $(I_{t-1}, I_t)$ may comprise a first image denoted by $I_{t-1}$ and a second image denoted by $I_t$ corresponding respectively to the video acquisition time instants $t$ - 1 and $t$.

According to some embodiments, step 307 may further comprise an interpolation preprocessing for increasing the resolution of the selected pair of images.

Step 309 may be performed to compute a pixel-wise optical flow between the successive images $I_{t-1}$ and $I_t$. The optical flow associated with the selected pair of images $(I_{t-1}, I_t)$ is denoted by $V_t$.

For optical flow estimation, it is assumed that pixel intensities are translated from one image to the next.

The goal of optical flow estimation is to compute an approximation to the motion field from time-varying image intensity. The optical flow estimation techniques aim at calculating the motion between the two successive images $I_{t-1}$ and $I_t$ at every pixel position.

The optical flow $V_t$ may comprise a set of values, each value $V_t(p_t)$ being associated with a pixel located in the image domain at location $p_t$ and corresponding to the displacement distance of this pixel across the pair of successive images, i.e. between the first image $I_{t-1}$ and the second image $I_t$.

The computation of the values $V_t(p_t)$ for each pixel in the image domain and thus the estimation of the optical flow associated with the pair of images $(I_{t-1}, I_t)$ may be performed using optical flow estimation techniques known by the skilled person in the art.

Step 311 may be performed to compute the set of motion parameters representing the motion model associated with the selected pair of images $(I_{t-1}, I_t)$.

In embodiments in which an affine motion model of the target object is considered, the set of motion parameters representing for a selected pair of images $(I_{t-1}, I_t)$ may comprise a rotation angle $\alpha_t$ a scaling coefficient $s_t$ and a translation vector $(k_t, h_t)$. The set of motion parameters may be accordingly denoted by $\theta_t = \{\alpha_t, s_t, (k_t, h_t)\}$.

Solving for the set of motion parameters $\theta_t = \{\alpha_t, s_t, (k_t, h_t)\}$ is equivalent to solve for the similarity transformation matrix $B_t = B_t(\theta_t)$.

According to some embodiments, solving for the similarity transformation matrix $B_t(\theta_t)$ may be performed by minimizing an additional function given by:

$$E\big(B(\theta_t)\big) = \sum_{p_t \in \Omega} \omega_{t-1}(p_t) \cdot \big| I_0(p_t) - I_t(B(\theta_t)A_{t-1}^{-1}p_t) \big| \qquad (4)$$

In equation (4):

- $I_0(p_t)$ designates the value of the pixel comprised in the initial image $I_0$ at the location given by the coordinates $p_t$; -

$I_t(BA_{t-1}^{-1}p_t)$ designates the value of the pixel comprised in the second image $I_t$ of the selected pair of images $(I_{t-1}, I_t)$, the location of the pixel in the second image given by $BA_{t-1}^{-1}p_t$ being determined by applying the transformation $BA_{t-1}^{-1}$ to the set of coordinates of the pixel comprised in the location represented by the coordinates $p_t$; and

- $\omega_{t-1}(p_t)$ designates the value of the pixel comprised in the extraction map $\omega_{t-1}$ determined for a previously selected pair of images $(I_{t-2}, I_{t-1})$, the location of the underlying pixel in the extraction map $\omega_{t-1}$ being given by the set of

coordinates $p_t$.

According to some embodiments, the minimization of equation (4) may be carried out using an iterative gradient-descent algorithm implemented to find the local minimum of the additional function.

The iterative gradient-descent approach is based on an iterative processing during N iterations of a sequence $\theta_t^1, \theta_t^2, \dots, \theta_t^N$ of the unknown set of motion parameters $\theta_t$ such that:

$$\theta_t^{n+1} = \theta_t^n - \tau \nabla E(\theta_t^n) \tag{5}$$

In equation (5):

- $\tau$ designates the step size of the gradient-descent algorithm;

- the index $n$ varying from 1 to $N$ designates the $n^{th}$ iteration of the iterative gradient-descent algorithm; and

- $\nabla E(\theta_t^n)$ designates the gradient of the function $E(\theta_t^n)$ given by:

$$\nabla E(\theta_t^n) = \sum_{p_t \in \Omega} \omega_{t-1}(p_t) . sign\left(I_0(p_t) - I_t\left(A_t^n(p_t)\right)\right) . \left[\frac{\partial I_t(p_t)}{\partial \theta_t^n}\right] \tag{6}$$

In equation (6), the term $\left[\frac{\partial I_t(p_t)}{\partial \theta_t^n}\right]$ designates the gradient of image $I_t$ relative to the vector of parameters $\theta_t^n$ .

The sequence $(\theta_t^n)$ converges, after the $N$ iterations, to the desired local minimum $\hat{\theta}_t$ such that $B_t(\hat{\theta}_t)$ satisfies the minimization problem of equation (4).

According to some embodiments, the step size $\tau$ of the gradient-descent algorithm may change from one iteration to another.

Further, the step size $\tau$ may be chosen in such a way that the variation ranges of the values of the parameters in the set $\theta_t = \{\alpha_t, s_t, (k_t, h_t)\}$ are taken into account during the iterative gradient-descent minimization. In such embodiments, the parameters $\alpha_t$, $s_t$ and $(k_t, h_t)$ in the set $\theta_t$ may be weighted respectively by step sizes $\tau_{\alpha_t}$, $\tau_{s_t}$ and $(\tau_{k_t}, \tau_{h_t})$ such that:

$$10^{-6} < \tau_{\alpha_t} < 0.1 \tag{7}$$

$$10^{-6} < \tau_{s_t} < 0.001 \tag{8}$$

$$10^{-6} < \tau_{k_t}, \tau_{h_t} < 2 \tag{9}$$

Step 313 may be performed to determine the parameters of the noise affecting the motion model of the target object 13.

According to some embodiments, the pixel-wise optical flow $V_t$ of the target object 13 corresponding to the selected pair of images $(I_{t-1}, I_t)$ may be corrupted by a Gaussian noise $N_t$ of mean $\mu_t$ and standard deviation $\sigma_t$. Step 313 may be accordingly performed to determine the mean and standard deviation of the model Gaussian noise. These parameters may be estimated according to the region $\Omega_r$ associated with the target object according to:

$$\mu_t = \frac{\sqrt{\sum_{p_t \in \Omega_r} |(A_t p_t - p_t) - V_t(p_t)|^2}}{card(\Omega_r)} \tag{10}$$

$$\sigma_t = \frac{\sqrt{\sum_{p_t \in \Omega_\Gamma}(|(A_t p_t - p_t) - V_t(p_t)|^2 - \mu_t)^2}}{card(\Omega_\Gamma)} \tag{11}$$

In equations (10) and (11), $card(\Omega_\Gamma)$ designates the cardinal of the region $\Omega_\Gamma$.

Step 315 may be performed to compute an energy map $\rho_t$ associated with the selected pair of images ($I_{t-1}$, $I_t$). The energy map $\rho_t$ comprises a value $\rho_t(p_t)$ associated with each pixel comprised in the image domain $\Omega$ at location represented by the set of homogeneous coordinates $p_t = (x_t, y_t, 1)$. The construction of an energy map $\rho_t$ of index t may accordingly be reduced to compute the values $\rho_t(p_t)$ for each pixel comprised in the image domain $\Omega$.

According to some embodiments, the value $\rho_t(p_t)$ of the energy map associated with the pixel comprised in the image domain at location $p_t$ may be determined from the optical flow $V_t$, the similarity transformation matrix $A_t$ and depending on the model noise variance according to:

$$\rho_t(p_t) = \frac{|(B_t p_t - p_t) - V_t(p_t)|^2}{\sigma_t} \tag{12}$$

Step 317 may be performed to compute an accumulated energy map denoted by $I_t$ from the auxiliary energy map $\rho_0$ and the energy maps $\rho_{i,i=1,...,t}$ computed for previously selected pairs of images. The accumulated energy map may be determined such that:

$$I_t(p_t) = \sum_{i=1}^{t} \frac{\rho_i(A_{i-1}p_t)}{t} \tag{13}$$

Step 319 may be performed to determine an extraction map $\omega_t$ for a selected pair of images ($I_{t-1}$, $I_t$) according to the minimization of a function that depends on the values of the set of motion parameters and the optical flow vectors associated with the selected pair of images ($I_{t-1}$, $I_t$) and with the previous pairs of images in the chronological image sequence. More specifically, the function may depend on the accumulated energy map $I_t$. Determining an extraction map requires determining which pixels in the image domain associated with the selected pair of images ($I_{t-1}$, $I_t$) are associated with the target object 13.

According to some embodiments, the extraction map $\omega_t$ for a selected pair of images ($I_{t-1}$, $I_t$) may be determined using a piece-wise image segmentation approach based on a division of the image domain $\Omega$ into $n$ non-overlapping sub-regions denoted by $\Omega_1, \Omega_2, ..., \Omega_n$ such that their union yields the image domain $\Omega$. Each sub-region $\Omega_j$ may be assigned a real scalar denoted by $c_j$ and standing for the mean intensity of the sub-region $\Omega_j$ with respect to the visible light video frames. Moreover, the scalars $c_{j,j=1,...,n}$ assigned to the sub-regions $\Omega_{j,j=1,...,n}$ may be ordered in a decreasing order $c_1 > c_2 > \cdots > c_n$ such that $\Omega_1$ corresponds to the sub-region of the image domain $\Omega$ comprising the target object 13 and the sub-regions $\Omega_{j,j=2,...,n}$ stand for the background's regions. Accordingly, using such a partition of the image domain, determining the current extraction map $\omega_t$ may be realized in two steps.

In a first step the sub-regions $\Omega_1, \Omega_2, ..., \Omega_n$ may be determined according to the minimization of the energy functional given by:

$$\lambda Perim(\Omega_\Gamma) + \sum_{j=1}^{n} \int_{p_t \in \Omega_j} \frac{\left(I_t(p_t) - c_j\right)^2}{\sigma_j} \tag{14}$$

The energy functional given in equation (14) is the addition of a first term and a second term. The first term is given by $\lambda Perim(\Omega_\Gamma)$ where $Perim(\Omega_\Gamma)$ stands for the perimeter of the target region $\Omega_\Gamma$ and $\lambda$ designates a positive-value tradeoff coefficient. The second term is the summation for $j = 1, ..., n$ of a definite integral over the pixels $p_t$ comprised in the sub-regions $\Omega_1, \Omega_2, ..., \Omega_n$, the definite integral being applied to a fractional function. The fractional function is defined by:

- a numerator given by $(I_t(p_t) - c_j)^{(2)}$ equal to the square of the difference between the accumulated energy $I_t(p_t)$ map

evaluated in the pixel located in $p_t$ and the scalar $c_j$ ;and

- a denumerator equal to $\sigma_j$ which designates the standard deviation of the motion model noise inside the region $\Omega_j$.

An exemplary technique that may be implemented for the resolution of equation (14) uses an active contour relaxation approach as disclosed in "I. Bechar, T. Lelore, F. Bouchara, V. Guis, M. Grimaldi, Toward an Airborne System for Near Real-Time Maritime Video-surveillance based on Synchronous Visible Light and Thermal Infrared Video Information Fusion: an Active Contour Approach, in Proceedings of The Ocean and Coastal Observation Sensors and Observing Systems, Numerical Models and Information Systems Conference, 2013".

In a second step, given the partitioning of the image domain and the subtraction of the foreground sub-region $\Omega_f \hat{\Omega}_1$ from the background sub-regions $\hat{\Omega}_{j,j=2,...,n}$, the energy map $\omega_t$ for a selected pair of images ($I_{t-1}$, $I_t$) may be constructed following the rule given previously in equation (2).

Step 321 is performed to determine whether a termination condition is satisfied. According to some embodiments, the termination condition may comprise checking if the totality of the images extracted from the received video frame has been processed in the selected pairs of images.

Z r The termination condition comprises checking if a predefined performance criterion is satisfied. This may comprise for example performance metrics evaluating the quality of the image segmentation or the detection of the target object 13.

If it is determined in step 312 that a termination condition is not satisfied, step 323 may be performed to determine if all the images in the chronological image have been processed in the selected pairs of images. If there remain at least two images that were not processed, step 325 may be performed to increment the temporal script of the selected pair of images for processing a next pair of images in the chronological image sequence.

If it is determined in step 321 that a termination condition is satisfied or if it is determined in step 323 that all the images in the sequence of successive images have been processed (i.e. $t = T$), step 327 may be performed to output the extraction map $\omega$ corresponding to the last selected pair of images.

Step 329 may be then performed to extract information related to the target object 13 from the determined extraction map $\omega$. Extracted information may be related to the size, the location, the dimensions, the direction, the type and the identity of a target object 13.

An analysis of the performances in terms of the true positive rate (TPR), the false positive rate (FPR), and the $F_1$ score has been carried out to validate the efficiency and robustness of the proposed target object extraction methods and devices according to some embodiments of the invention. The proposed target object extraction method is referred to as 'RiOS'. A comparison to results obtained using existing algorithms is also performed.

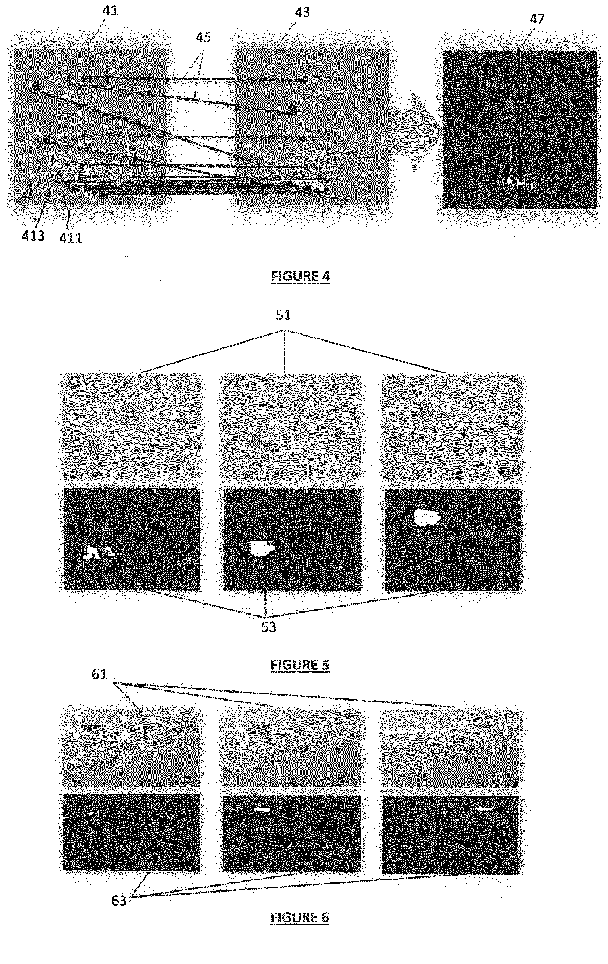

Figure 4 is a diagram illustrating the construction of an auxiliary energy map 47 according to some embodiments of the invention based on a matching 45 between an auxiliary image 41 and an initial image 43 in which the target object 411 is a boat appearing on the background 413. The matching 45 between cross and circle points in the auxiliary image 41 with their corresponding transformed points in the initial image 43 enables to construct the auxiliary energy map 47. The matching 45 between the cross points is discarded as these points do not respect the epipolar constraint. The initial set of points corresponding to the matching 45 between the circle points are used to construct the auxiliary energy map 47.

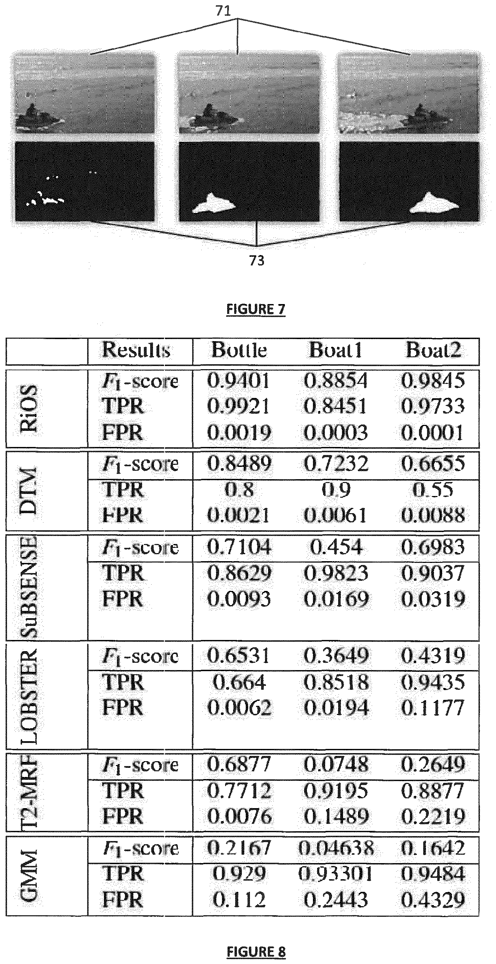

Figures 5, 6 and 7 depict three extraction maps (53 in figure 5, 63 in figure 6, 73 in figure 7) and their corresponding second images comprised in three selected pairs of images (51 in figure 5, 61 in figure 6, and 71 in figure 7) according to some embodiments of the invention. The target object concerned in experiments related to figure 5 is a bottle floating in water. Experiments reported in figures 6 and 7 concern both a boat moving in a harbor, referred to in figure 6 and figure 7 as 'boat 1' and 'boat 2', respectively.

Figure 8 is a table reporting the performances of the proposed method referred to as 'RiOS' in terms of the F1-score, the true positive rate (TPR) and the false positive rate (FPR) according to the some embodiments for the extraction of the bottle, boat 1, and boat 2 appearing respectively in the figure 5, 6, and 7. The performances of the RiOS solution are compared to existing techniques comprising:

- DTM technique disclosed in "A. Chan, V. Mahadevan, N. Vasconcelos, Generalized Stauffer-Grimson Background Subtraction for Dynamic Scenes, Machine Vision and Applications Volume 22, Issue 5, pages 751-766, 2011";

- SuBSENSE method disclosed in "P.-L. St-Charles, G.-A. Bilodeau, R. Bergevin, Flexible background subtraction with self-balanced local sensitivity, In Proceedings of the IEEE Conference on Computer Vision and Pattern Recognition Workshops (CVPRW), pages 414-419, 2014".

- LOBSTER method disclosed in "P.-L. St-Charles, G.-A. Bilodeau, Improving background subtraction using local binary similarity patterns, In Proceedings of the IEEE Winter Conference on Applications of Computer Vision, pages 509-515, 2014";

- T2-MRF technique disclosed in "Z. Zhao, T. Bouwmans, X. Zhang, Y. Fang, A fuzzy background modeling approach for motion detection in dynamic backgrounds, Multimedia and Signal Processing, Volume 346 of the series Communications in Computer and Information Science, pages 177-185"; and

- GMM method disclosed in "Z. Zivkovic, Improved adaptive gaussian mixture model for background subtraction, in Proceedings of the International Conference on Pattern Recognition, volume. 2, pages 28-31, 2004".

Numerical results depicted in figure 8 show that the proposed RiOS solution according to the various embodiments of the invention achieve a very small false positive rate, while being very precise.

Further, reported results show that due to the presence of important foam near the vessel which partially occludes the bow in the sequence of figure 6 concerning the boat 1, the yielded segmentation results for this sequence of images are less accurate than for the other sequences in figures 5 and 7. The low resolutions of the video sequence as well as the small size of the target object induce also a motion quantization which disturbs the optical flow estimation algorithm.

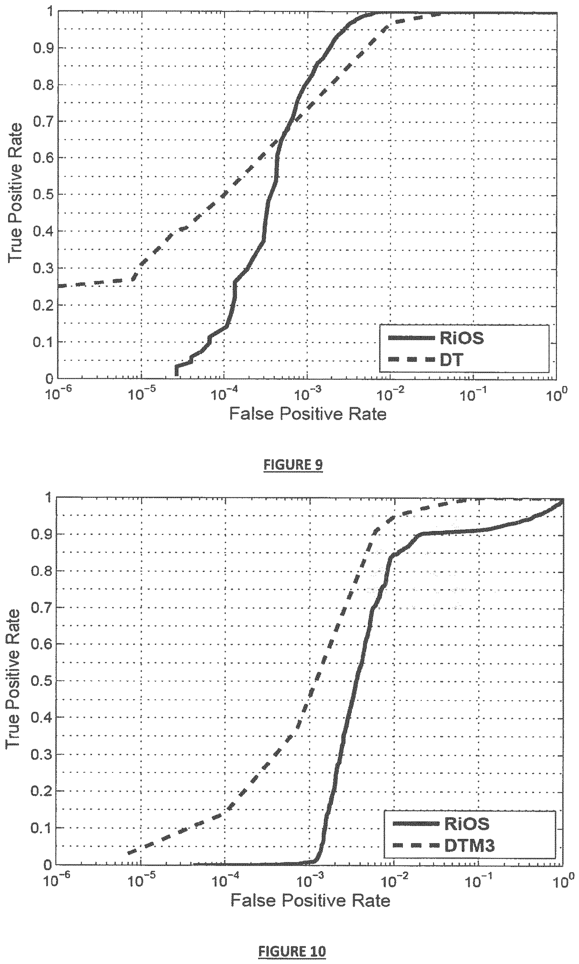

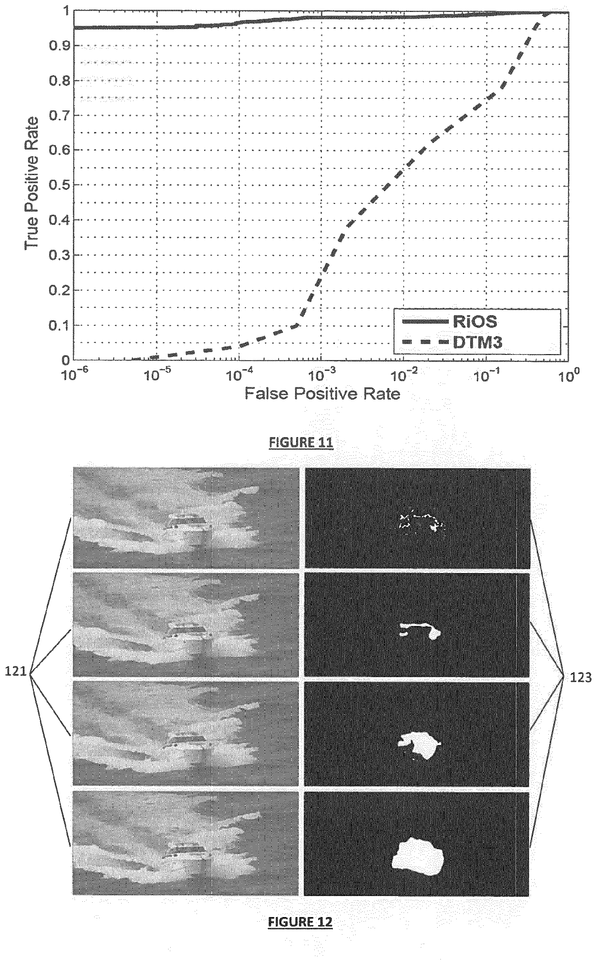

Figures 9, 10 and 11 are diagrams illustrating the true positive rate and the false positive rate obtained using the proposed method 'RiOS' in comparison to the DTM (also referred to as 'DT') method for the extraction of the bottle sequence of figure 5, the boat 1 sequence of figure 6, and the boat 2 sequence of figure 7, respectively. Numerical results show the outperformance of the proposed RiOS method over the DTM image segmentation technique, in particular when the video sequence has good characteristics as it is the case of the sequence corresponding to the boat 2 (corresponding results depicted in figure 11). Good characteristics comprise a large enough target object, absence of occlusion, and absence of perspective distortions.

The performances of the target object extraction methods according to the various embodiments of the invention have been further evaluated considering video streams from which 10 video frames or images are extracted. The analyzed video streams are further heterogeneous and show different maritime target objects under varying weather conditions. Furthermore, the camera is moving and no a-prior knowledge about the shape and the size of both the target object and the background are available in advance. The inspected target objects in these video sequences range from small boats (less than 5 meters) to cargos and sea conditions range from 0 to 4 units over Douglas Sea Scale.

Figure 12 shows 4 images 121 (video frames corresponding to $t$ = 0,2,4,6) extracted from one of the underlying videos as well as the constructed extraction maps 123 obtained by processing the source images 121. The target object in this video sequence is a fast white boat. The target object and the background have very similar textures. The first extraction map is obtained using the fundamental matrix. It contains a sufficient number of initial points for being able to be further improved using the iterative energy minimization-based method according to the various embodiments of the invention.

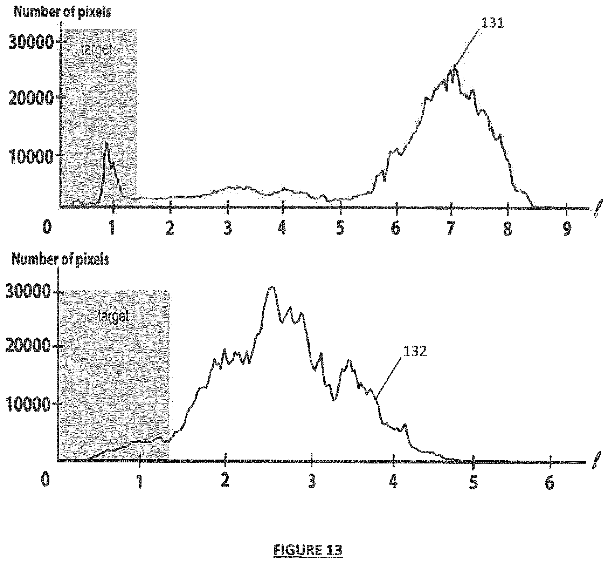

Figure 13 illustrates two diagrams 131 and 132 evaluating the histograms of the accumulated energy map $I_t$ for different video sequences obtained according to some embodiments of the invention. The histogram 132 corresponds to a sailboat containing many moving objects (people, flag, sail). Further, the relative motion of the boat and the background are nearly zero (the boat is tailwind and goes as fast as the waves).

The diagram 131 shows a clear pick in the location of the target object, enabling the separation of the target object from the background as its motion model lies far away from the target's location pick.

The diagram 132 shows no clear pick at the location of the target object. However, as the final object segmentation according to the various embodiments of the invention is achieved using an energy-minimization approach, the spatial relationships of the energy maps are taken into account, enabling a correct segmentation of the corresponding image and a correct extraction of the target object.

Although the various embodiments have been detailed in the case of visible light video streams acquired by airborne video acquisition means, it should be noted that the invention can also be applied to color images or binary images. Further, images may result from the capture of a scene or the digitization of a document presenting an object on a background.

Further, the invention is not limited to maritime surveillance applications and may be integrated in a wide variety of video and image processing systems used for example in medical imaging applications.

Moreover, although the various embodiments of the invention have been detailed in the case of a moving target object in an environment comprising a moving background, it should be noted that the invention is not limited to such cases and may be also applied for example for monitoring static target objects appearing in environments comprising moving backgrounds.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

**Claims**

1. A computer-implemented method of extracting a target object from a video comprising at least a chronological image sequence, the motion of said target object across said chronological image sequence being represented by a predefined motion model, said motion model being associated with a set of motion parameters corresponding to the motion of said target object between two images of said sequence, the method comprising selecting pairs of successive images in said chronological image sequence, each pair comprising a first image and a second image and being associated with values of said set of motion parameters and with an optical flow vector representing the displacement of the pixels between the first image and the second image of said pair of images, wherein the method comprises iterative construction of an extraction map using said pairs of successive images, the method comprising:
- determining (319) for each selected pair of images an extraction map, each component of the extraction map corresponding to a pixel of the second image of said selected pair of images and being assigned a binary value, the extraction map for a given pair of images being determined according to the minimization of a function that depends on the values of the set of motion parameters and the optical flow vectors associated with said given pair of images and with the previous pairs of images in said chronological image sequence,
the method further comprising, in response to the verification of a termination condition, extracting the target object from the extraction map associated with a selected pair of images, said extraction map comprising a set of pixels associated with said target object and a set of pixels associated with a background, said termination condition comprising checking if a predefined performance criterion is satisfied.

2. The method of any claim 1, wherein each image in said chronological image sequence is associated with an image domain, said image domain comprising pixels associated with the target object and pixels associated with a background, each pixel having a value, the location of a pixel in a given image domain being represented by a set of coordinates, said set of coordinates comprising three real values.

3. The method of claim 2, wherein said predefined motion model corresponds to the application of a transformation operation to each set of coordinates representing a pixel associated with the target object.

4. The method of any preceding claim, wherein the optical flow vector associated with a given pair of images comprises a set of values, each value representing the displacement distance of a pixel between the first image and the second image, said set of values being determined by applying an optical flow estimation algorithm.

5. The method of any preceding claim 2 to 4, wherein the values of said set of motion parameters associated with a given pair of images are further determined according to the minimization of an additional function by applying a gradient descent algorithm.

6. The method of claim 5, wherein said chronological image sequence comprises an initial image $I_0$ corresponding to a time instant $t = 0$, said additional function being determined by summing a pixel-wise term over at least a part of the pixels comprised in the image domain associated with said given pair of images, said pixel-wise term comprising, for a given pixel located at a given location in said image domain, the product between:

   - the value of the pixel comprised at said given location in the extraction map determined for a previously selected pair of images, and
   - the absolute value of the difference between the value of the pixel comprised in said initial image at said given location and the value of a second pixel comprised in the second image of said given pair of images, the set of coordinates representing the location of said second pixel being determined by applying said transformation to the set of coordinates of said given pixel.

7. The method of any preceding claim, further comprising determining, for each selected pair of images, a value of the standard deviation of a noise associated with said motion model.

8. The method of claim 7, wherein the function for each selected pair of images further depends on the value of the standard deviation.

9. The method of any preceding claim, wherein each component of the extraction map corresponding to a pixel associated with the target object is assigned a binary value equal to one and each component of the extraction map corresponding to a pixel associated with the background is assigned a binary value equal to zero.

10. The method of any preceding claim, wherein said termination condition comprises checking if all images in said chronological image sequence have been processed in the selected pairs of images.

11. The method of any preceding claim, wherein said transformation operation is based on at least one affine transformation, each affine transformation being chosen in a group consisting of a translation, a rotation, a scaling, a homothety, a reflection, a rotation, a shear mapping, and a similarity transformation.

12. The method of claim 11, wherein said transformation operation is a similarity transformation, said set of motion parameters comprising a scaling coefficient, a rotation angle, and two translation coefficients.

13. A device for extracting a target object from a video comprising at least a chronological image sequence, the motion of said target object across said chronological image sequence being represented by a predefined motion model, said motion model being associated with a set of motion parameters corresponding to the motion of said target object between two images of said sequence, the device being configured to select pairs of successive images in said chronological image sequence, each pair comprising a first image and a second image and being associated with values of said set of motion parameters and with an optical flow vector representing the displacement of the pixels between the first image and the second image of said pair of images, wherein the device comprises:

   - video processing peripherals (25) configured to iteratively construct of an extraction map using said pairs of successive images, the video processing peripherals (25) being configured to determine for each selected pair of images an extraction map, each component of the extraction map corresponding to a pixel of the second image of said selected pair of images and being assigned a binary value, the extraction map for a given pair of images being determined according to the minimization of a function that depends on the values of the set of motion parameters and the optical flow vectors associated with said given pair of images and with the previous pairs of images in said chronological image sequence,

   the video processing peripherals (25) being further configured to extract the target object from the extraction map associated with a selected pair of images in response to the verification of a termination condition, said extraction map comprising a set of pixels associated with said target object and a set of pixels associated with a background, said termination condition comprising checking if a predefined performance criterion is satisfied.

14. A video processing system for extracting a target object from a video comprising at least a chronological image sequence, the video processing system comprising image acquisition peripherals configured to acquire said chronological image sequence and a device configured to extract said target object as claimed in claim 13.

**Patentansprüche**

1. Computerimplementiertes Verfahren zum Extrahieren eines Zielobjekts aus einem Video, umfassend mindestens eine chronologische Bildsequenz, wobei die Bewegung des Zielobjekts über die chronologische Bildsequenz durch ein vorbestimmtes Bewegungsmodell dargestellt ist, wobei das Bewegungsmodell einem Satz von Bewegungsparametern zugeordnet ist, welche der Bewegung des Zielobjekts zwischen zwei Bildern der Sequenz entspricht, wobei das Verfahren das Auswählen von Paaren von aufeinanderfolgenden Bildern in der chronologische Bildsequenz umfasst, wobei jedes Paar ein erstes Bild und ein zweites Bild umfasst und Werten des Satzes von Bewegungsparametern zugeordnet ist und wobei ein optischer Flussvektor die Verschiebung der Pixel zwischen dem ersten Bild und dem zweiten Bild des Paars von Bildern darstellt, wobei das Verfahren das iterative Erzeugen einer Extraktionskarte unter Verwendung des Paars von aufeinanderfolgenden Bildern umfasst, wobei das Verfahren umfasst:

   - Bestimmen (319), für jedes ausgewählte Paar von Bildern, einer Extraktionskarte, wobei jede Komponente der Extraktionskarte einem Pixel des zweiten Bildes des ausgewählten Paares von Bildern entspricht und dieser ein binärer Wert zugewiesen wird, wobei die Extraktionskarte für ein gegebenes Paar von Bildern gemäß der Minimierung einer Funktion bestimmt wird, welche von Werten des Satzes von Bewegungsparametern und von den optischen Flussvektoren abhängt, die dem gegebenen Paar von Bildern und den vorhergehenden Paaren von Bildern in der chronologischen Bildsequenz zugeordnet sind,

wobei das Verfahren ferner, als Reaktion auf die Verifizierung einer Beendigungsbedingung, das Extrahieren des Zielobjekts aus der Extraktionskarte umfasst, welche einem ausgewählten Paar von Bildern zugeordnet ist, wobei die Extraktionskarte einen Satz von Pixeln, die dem Zielobjekt zugeordnet sind und einen Satz von Pixeln umfasst, die einem Hintergrund zugeordnet sind, wobei die Beendigungsbedingung das Überprüfen umfasst, ob ein vorbestimmtes Leistungskriterium erfüllt ist.

2. Verfahren nach Anspruch 1, wobei jedes Bild in der chronologischen Bildsequenz einer Bilddomäne zugeordnet ist, wobei die Bilddomäne Pixel, die dem Zielobjekt zugeordnet sind und Pixel umfasst, die einem Hintergrund zugeordnet sind, wobei jedes Pixel einen Wert aufweist, wobei die Position eines Pixels in einer gegebenen Bilddomäne durch einen Satz von Koordinaten dargestellt ist, wobei der Satz von Koordinaten drei reelle Werte umfasst.

3. Verfahren nach Anspruch 2, wobei das vorbestimmte Bewegungsmodell der Anwendung einer Transformationsoperation auf jeden Satz von Koordinaten entspricht, welche ein Pixel darstellen, welches dem Zielobjekt zugeordnet ist.

4. Verfahren nach einem der vorhergehenden Ansprüche, wobei der optische Flussvektor, der einem gegebenen Paar von Bildern zugeordnet ist, einen Satz von Werten umfasst, wobei jeder Wert den Verschiebungsabstand eines Pixels zwischen dem ersten Bild und dem zweiten Bild darstellt, wobei der Satz von Werten bestimmt wird, indem ein optischer Flussschätzungsalgorithmus angewendet wird.

5. Verfahren nach einem der vorhergehenden Ansprüche 2 bis 4, wobei die Werte des Satzes von Bewegungsparametern, die einem gegebenen Paar von Bildern zugeordnet sind, ferner gemäß der Minimierung einer zusätzlichen Funktion durch Anwenden eines Gradientenabstiegsalgorithmus bestimmt werden.

6. Verfahren nach Anspruch 5, wobei die chronologische Bildsequenz ein anfängliches Bild $I_0$ umfasst, das einem Zeitpunkt $t = 0$ entspricht, wobei die zusätzliche Funktion durch Summieren eines pixelweisen Terms über mindestens einen Teil der Pixel bestimmt wird, die in der Bilddomäne enthalten sind, die dem gegebenen Paar von Bildern zugeordnet ist, wobei der pixelweise Term für ein gegebenes Pixel, welches an einer gegebenen Position in der Bilddomäne angeordnet ist, das Produkt umfasst, zwischen:

- dem Wert des Pixels, welches an der gegebenen Position in der Extraktionskarte enthalten ist, welche für ein zuvor ausgewähltes Paar von Bildern bestimmt wurde, und
- dem absoluten Wert der Differenz zwischen dem Wert des Pixels, welches in dem anfänglichen Bild an der gegebenen Position enthalten ist und dem Wert eines zweiten Pixels, welches in dem zweiten Bild des gegebenen Paars von Bildern enthalten ist, wobei der Satz von Koordinaten die Position des zweiten Pixels darstellt, welches durch Anwenden der Transformation auf den Satz von Koordinaten des gegebenen Pixels bestimmt wurde.

7. Verfahren nach einem der vorhergehenden Ansprüche, ferner umfassend das Bestimmen, für jedes ausgewählte Paar von Bildern, eines Werts der Standardabweichung eines Rausches, welcher dem Bewegungsmodell zugeordnet ist.

8. Verfahren nach Anspruch 7, wobei die Funktion für jedes ausgewählte Paar von Bildern ferner von dem Wert der Standardabweichung abhängt.

9. Verfahren nach einem der vorhergehenden Ansprüche, wobei jeder Komponente der Extraktionskarte, die einem Pixel entspricht, das dem Zielobjekt zugeordnet ist, ein binärer Wert zugewiesen wird, welcher gleich eins ist, und jeder Komponente der Extraktionskarte, die einem Pixel entspricht, welches dem Hintergrund zugeordnet ist, ein binärer Wert zugewiesen wird, der gleich Null ist.

10. Verfahren nach einem der vorhergehenden Ansprüche, wobei die Beendigungsbedingung das Überprüfen umfasst, ob alle Bilder in der chronologischen Bildsequenz in den ausgewählten Paaren von Bildern verarbeitet worden sind.

11. Verfahren nach einem der vorhergehenden Ansprüche, wobei die Transformationsoperation auf mindestens einer affinen Transformation basiert, wobei jede affine Transformation aus einer Gruppe ausgewählt wird, bestehend aus: Translation, Rotation, Skalieren, Homothetie, Reflexion, Rotation, Scherkartierung, und Ähnlichkeitstransformation.

**12.** Verfahren nach Anspruch 11, wobei die Transformationsoperation eine Ähnlichkeitstransformation ist, wobei der Satz von Bewegungsparametern einen Skalierungskoeffizienten, einen Drehwinkel, und zwei Translationskoeffizienten umfasst.

**13.** Vorrichtung zum Extrahieren eines Zielobjekts aus einem Video, umfassend mindestens eine chronologische Bildsequenz, wobei die Bewegung des Zielobjekts über die chronologische Bildsequenz durch ein vorbestimmtes Bewegungsmodell dargestellt ist, wobei das Bewegungsmodell einem Satz von Bewegungsparametern zugeordnet ist, welche der Bewegung des Zielobjekts zwischen zwei Bildern der Sequenz entsprechen, wobei die Vorrichtung konfiguriert ist, um Paare von aufeinanderfolgenden Bildern in der chronologischen Bildsequenz auszuwählen, wobei jedes Paar ein erstes Bild und ein zweites Bild umfasst und Werten des Satzes von Bewegungsparametern sowie einem optischen Flussvektor, der die Verschiebung der Pixel zwischen dem ersten Bild und dem zweiten Bild des Paars von Bildern darstellt, zugeordnet ist, wobei die Vorrichtung umfasst:

- Videoverarbeitungs-Peripheriegeräte (25), welche konfiguriert sind, um iterativ eine Extraktionskarte unter Verwendung der Paare von aufeinanderfolgenden Bildern zu erzeugen, wobei die Videoverarbeitungs-Peripheriegeräte (25) konfiguriert sind, um für jedes ausgewählte Paar von Bildern, eine Extraktionskarte zu bestimmen, wobei jede Komponente der Extraktionskarte einem Pixel des zweiten Bildes des ausgewählten Paares von Bildern entspricht, und dieser ein binärer Wert zugewiesen wird, wobei die Extraktionskarte für ein gegebenes Paar von Bildern gemäß der Minimierung einer Funktion bestimmt wird, welche von den Werten des Satzes von Bewegungsparametern und den optischen Flussvektoren abhängt, die dem gegebenen Paar von Bildern und den vorhergehenden Paaren von Bildern in der chronologischen Bildsequenz zugeordnet sind,

die Videoverarbeitungs-Peripheriegeräte (25) ferner konfiguriert sind, um das Zielobjekt aus der Extraktionskarte zu extrahieren, welche einem ausgewählten Paar von Bildern zugeordnet ist, als Reaktion auf die Verifizierung einer Beendigungsbedingung, wobei die Extraktionskarte einen Satz von Pixeln, welche dem Zielobjekt zugeordnet sind, und einen Satz von Pixeln umfasst, welche einem Hintergrund zugeordnet sind, wobei die Beendigungsbedingung das Überprüfen umfasst, ob ein vorbestimmtes Leistungskriterium erfüllt ist.

**14.** Videoverarbeitungssystem zum Extrahieren eines Zielobjekts aus einem Video, umfassend mindestens eine chronologische Bildsequenz, wobei das Videoverarbeitungssystem Bilderfassungs-Peripheriegeräte, welche konfiguriert sind, um die chronologische Bildsequenz zu erfassen und eine Vorrichtung umfasst, die konfiguriert ist, um das Zielobjekt nach Anspruch 13 zu extrahieren.

**Revendications**

**1.** Procédé mis en œuvre sur ordinateur consistant à extraire un objet cible d'une vidéo comprenant au moins une séquence chronologique d'images, le mouvement dudit objet cible à travers ladite séquence chronologique d'images étant représenté par un modèle de mouvement prédéfini, ledit modèle de mouvement étant associé à un ensemble de paramètres de mouvements correspondant au mouvement dudit objet cible entre deux images de ladite séquence, le procédé comprenant la sélection de paires d'images successives dans ladite séquence chronologique d'images, chaque paire comprenant une première image et une seconde image et étant associée à des valeurs dudit ensemble de paramètres de mouvement et avec un vecteur de flux optique représentant le déplacement des pixels entre la première image et la seconde image de ladite paire d'images, dans lequel le procédé comprend la construction itérative d'une carte d'extraction en utilisant lesdites paires d'images successives, le procédé comprenant :

- la détermination (319), pour chaque paire sélectionnée d'images, d'une carte d'extraction, chaque composant de la carte d'extraction correspondant à un pixel de la seconde image de ladite paire sélectionnée d'images et une valeur binaire lui étant assignée, la carte d'extraction pour une paire donnée d'images étant déterminée selon la minimisation d'une fonction qui dépend des valeurs de l'ensemble de paramètres de mouvement et des vecteurs de flux optiques associés à ladite paire donnée d'images et aux paires précédentes d'images dans ladite séquence chronologique d'images,

le procédé comprenant en outre, en réponse à la vérification d'une condition de terminaison, l'extraction de l'objet cible de la carte d'extraction associée à une paire sélectionnée d'images, ladite carte d'extraction comprenant un ensemble de pixels associés audit objet cible et un ensemble de pixels associés à un arrière-plan, ladite condition de terminaison comprenant de vérifier si un critère de performances prédéfini est satisfait.

**2.** Procédé selon la revendication 1, dans lequel chaque image dans ladite séquence chronologique d'images est associée à un domaine d'image, ledit domaine d'image comprenant des pixels associés à l'objet cible et des pixels associés à un arrière-plan, chaque pixel présentant une valeur, l'emplacement d'un pixel dans un domaine d'image donné étant représenté par un ensemble de coordonnées, ledit ensemble de coordonnées comprenant trois valeurs réelles.

**3.** Procédé selon la revendication 2, dans lequel ledit modèle de mouvement prédéfini correspond à l'application d'une opération de transformation à chaque ensemble de coordonnées représentant un pixel associé à l'objet cible.

**4.** Procédé selon l'une quelconque des revendications précédentes, dans lequel le vecteur de flux optique associé à une paire donnée d'images comprend un ensemble de valeurs, chaque valeur représentant la distance de déplacement d'un pixel entre la première image et la seconde image, ledit ensemble de valeurs étant déterminé en appliquant un algorithme d'estimation de flux optique.

**5.** Procédé selon l'une quelconque des revendications 2 à 4, dans lequel les valeurs dudit ensemble de paramètres de mouvement associés à une paire donnée d'images sont en outre déterminées selon la minimisation d'une fonction supplémentaire en appliquant un algorithme de descente de gradient.

**6.** Procédé selon la revendication 5, dans lequel ladite séquence chronologique d'images comprend une image initiale $I_0$, correspondant à un instant dans le temps $t = 0$, ladite fonction supplémentaire étant déterminée en ajoutant un terme à l'échelle du pixel sur au moins une partie des pixels compris dans le domaine d'image associé à ladite paire indiquée d'images, ledit terme à l'échelle du pixel comprenant, pour un pixel donné situé à un emplacement donné dans ledit domaine d'image, le produit entre :

- la valeur du pixel compris dans ledit emplacement donné dans la carte d'extraction déterminé pour une paire d'images sélectionnée précédemment, et
- la valeur absolue de la différence entre la valeur du pixel compris dans ladite image initiale audit emplacement donné et la valeur d'un second pixel compris dans la seconde image de ladite paire d'images données, l'ensemble de coordonnées représentant l'emplacement dudit second pixel déterminé en appliquant ladite transformation à l'ensemble de coordonnées dudit pixel donné.

**7.** Procédé selon l'une quelconque des revendications précédentes, comprenant en outre la détermination, pour chaque paire d'images sélectionnées, d'une valeur de l'écart-type d'un bruit associé audit modèle de mouvement.

**8.** Procédé selon la revendication 7, dans lequel la fonction pour chaque paire sélectionnée d'images dépend en outre de la valeur de l'écart-type.

**9.** Procédé selon l'une quelconque des revendications précédentes, dans lequel à chaque composant de la carte d'extraction correspondant à un pixel associé à l'objet cible est assigné une valeur binaire égale à un et à chaque composant de la carte d'extraction correspondant à un pixel associé à l'arrière-plan est assigné une valeur binaire égale à zéro.

**10.** Procédé selon l'une quelconque des revendications précédentes, dans lequel ladite condition de terminaison comprend de vérifier si toutes les images dans ladite séquence chronologique d'images ont été traitées dans les paires sélectionnées d'images.

**11.** Procédé selon l'une quelconque des revendications précédentes, dans lequel ladite opération de transformation est basée sur au moins une transformation affine, chaque transformation affine étant choisie dans un groupe constitué d'une translation, une rotation, une mise à l'échelle, une homothétie, une réflexion, une rotation, une cartographie de cisaillement et une transformation de similitude.

**12.** Procédé selon la revendication 11, dans lequel ladite opération de transformation est une transformation de similitude, ledit ensemble de paramètres de mouvement comprenant un coefficient de mise à l'échelle, un angle de rotation et deux coefficients de translation.

**13.** Dispositif pour extraire un objet cible d'une vidéo comprenant au moins une séquence chronologique d'images, le mouvement dudit objet cible à travers ladite séquence chronologique d'images étant représenté par un modèle de mouvement prédéfini, ledit modèle de mouvement étant associé à un ensemble de paramètres de mouvement correspondant au mouvement dudit objet cible entre deux images de ladite séquence, le dispositif étant configuré pour sélectionner des paires d'images successives dans ladite séquence chronologique d'images, chaque paire comprenant une première image et une seconde image et étant associée à des valeurs dudit ensemble de paramètres de mouvement et à un vecteur de flux optique représentant le déplacement des pixels entre la première image et la seconde image de ladite paire d'images, dans lequel le dispositif comprend :

- des périphériques de traitement vidéo (25) configurés pour construire de manière itérative une carte d'extraction en utilisant ladite paire d'images successives, les périphériques de traitement vidéo (25) étant configurés pour déterminer, pour chaque paire sélectionnée d'images, une carte d'extraction, chaque composant de la carte d'extraction correspondant à un pixel de la seconde image de ladite paire sélectionnée d'images et une valeur binaire lui étant assignée, la carte d'extraction pour une paire donnée d'images étant déterminée selon la minimisation d'une fonction qui dépend des valeurs de l'ensemble de paramètres de mouvement et des vecteurs de flux optiques associés à ladite paire donnée d'images et aux paires précédentes d'images dans ladite séquence chronologique d'images,

les périphériques de traitement vidéo (25) étant en outre configurés pour extraire l'objet cible de la carte d'extraction associée à une paire sélectionnée d'images en réponse à la vérification d'une condition de terminaison, ladite carte d'extraction comprenant un ensemble de pixels associés audit objet cible, et un ensemble de pixels associés à un arrière-plan, ladite condition de terminaison comprenant de vérifier si un critère de performance prédéfini est satisfait.

14. Système de traitement vidéo permettant d'extraire un objet cible d'une vidéo comprenant au moins une séquence chronologique d'images, le système de traitement vidéo comprenant des périphériques d'acquisition d'image configurés pour acquérir ladite séquence d'image chronologique et un dispositif configuré pour extraire ledit objet cible selon la revendication 13.

100

17

11

13

15

**FIGURE 1**

17

21

Video stream

23
Storage peripherals

25
Video-Processing peripherals

26
Data output unit

29
Output peripherals

27
Input peripherals

**FIGURE 2**

Designate video acquisition conditions and a target object and perform video acquisition

301

Receive inputs: - video data, - $T$ images $I_{t,t=0,...,T}$

303

Determine an auxiliary energy map $\rho_0$ and an initial similarity transformation matrix $A_1$

305

$t = 2$

306

Select a pair of successive images $I_t$ and $I_{t-1}$

307

Compute pixel-wise optical flow $V_t$ between image $I_{t-1}$ and $I_t$

309

Compute affine motion model parameters between image $I_{t-1}$ and $I_t$ by solving an energy minimization problem

311

Estimate motion model noise parameters (standard deviation and mean)

313

Compute energy map $\rho_t$ from the optical flow $V_t$ , the similarity transformation matrix $A_t$ and the motion model noise parameters

315

Compute an accumulated energy map $l_t$ from energy maps computed for previous selected pairs of image

317

Determine an extraction map $\omega_t$ for images $I_{t-1}$ and $I_t$ by minimizing an energy functional that depends on the accumulated energy map

319

321

Termination condition satisfied ?

No          Yes

323

$t > T?$

325

$t = t + 1$

327

Output updated extraction map $\omega_t$

329

Extract information related to the object of interest

**FIGURE 3**

23

**FIGURE 4**

**FIGURE 5**

**FIGURE 6**

FIGURE 7

| | Results | Bottle | Boat1 | Boat2 |
|---|---|---|---|---|
| **RiOS** | $F_1$-score | 0.9401 | 0.8854 | 0.9845 |
| | TPR | 0.9921 | 0.8451 | 0.9733 |
| | FPR | 0.0019 | 0.0003 | 0.0001 |
| **DTM** | $F_1$-score | 0.8489 | 0.7232 | 0.6655 |
| | TPR | 0.8 | 0.9 | 0.55 |
| | FPR | 0.0021 | 0.0061 | 0.0088 |
| **SuBSENSE** | $F_1$-score | 0.7104 | 0.454 | 0.6983 |
| | TPR | 0.8629 | 0.9823 | 0.9037 |
| | FPR | 0.0093 | 0.0169 | 0.0319 |
| **LOBSTER** | $F_1$-score | 0.6531 | 0.3649 | 0.4319 |
| | TPR | 0.664 | 0.8518 | 0.9435 |
| | FPR | 0.0062 | 0.0194 | 0.1177 |
| **T2-MRF** | $F_1$-score | 0.6877 | 0.0748 | 0.2649 |
| | TPR | 0.7712 | 0.9195 | 0.8877 |
| | FPR | 0.0076 | 0.1489 | 0.2219 |
| **GMM** | $F_1$-score | 0.2167 | 0.04638 | 0.1642 |
| | TPR | 0.929 | 0.93301 | 0.9484 |
| | FPR | 0.112 | 0.2443 | 0.4329 |

FIGURE 8

FIGURE 9

FIGURE 10

FIGURE 11

FIGURE 12

FIGURE 13

**REFERENCES CITED IN THE DESCRIPTION**

**Non-patent literature cited in the description**

- **C. STAUFFER ; W. E. L. GRIMSON.** Learning Patterns of Activity Using Real-Time Tracking. *IEEE Transactions on Pattern Analysis and Machine Intelligence,* 1999, vol. 22 (8), 747-757
- **S. FEFILATYEV ; D. B. GOLDGOF ; C. LEMBKE.** Tracking Ships From Fast Moving Camera Through Image Registration. *Proceedings of the IEEE International Conference on Pattern Recognition,* 2010, 3500-3503
- **D. BLOISI ; L. LOCCHI.** ARGOS-A Video Surveillance System for Boat Traffic Monitoring in Venice. *International Journal of Pattern Recognition and Artificial Intelligence,* 2009, vol. 23 (7), 1477-1502
- **BECHAR I.** Object segmentation from a dynamic background using a pixel-wise rigidity criterion and application to maritime target recognition. *IEEE International Conference on Image Processing (ICIP),* 363-367
- Video Processing from Electro-optical Sensors for Object Detection and Tracking in Maritime Environment: A Survey. **PRASAD D K et al.** ARXIV.ORG. CORNELL UNIVERSITY LIBRARY, 17 November 2016
- **R. VIDAL ; A. RAVICHANDRAN.** Optical Flow Estimation Segmentation of Multiple Moving Dynamic Textures. *Proceedings of IEEE Computer Society Conference on Computer Vision and Pattern Recognition,* 2005, vol. 2, 516-521
- **V. MAHADEVAN ; N. VASCONCELOS.** Background Subtraction in Highly Dynamic Scenes. *Proceedings of IEE Computer Society Conference on Computer Vision and Pattern Recognition,* 2008, 1-6
- **A. CHAN ; V. MAHADEVAN ; N. VASCONCELOS.** Generalized Stauffer-Grimson Background Subtraction for Dynamic Scenes. *Machine Vision and Applications,* 2011, vol. 22 (5), 751-766
- **B. J. RHODES et al.** Seacoast: Persistent Surveillance and Automated Scene Understanding for Ports and Coastal Areas. *Proceedings of SPIE 6578, Defense Transformation and Net-Centric Systems,* 2007
- **A. SMITH ; M. TEAL.** Identification and Tracking of Marine Objects in Near-infrared Image Sequences for Collision Avoidance. *Proceedings of IEE Conference on Image Processing and its Applications,* 1999, 250-254

- **I. BECHAR ; T. LELORE ; F. BOUCHARA ; V. GUIS, M. GRIMALDI.** Toward an Airborne System for Near Real-Time Maritime Video-surveillance based on Synchronous Visible Light and Thermal Infrared Video Information Fusion: an Active Contour Approach. *Proceedings of The Ocean and Coastal Observation Sensors and Observing Systems, Numerical Models and Information Systems Conference, 2013*
- **G.WOLBERG ; S. ZOKAI.** Robust image registration using log-polar transform. *Proceedings of the International Conference on Image Processing,* 2000, vol. 1, 493-496
- **I. BECHAR ; T. LELORE ; F. BOUCHARA ; V. GUIS ; M. GRIMALDI.** Toward an Airborne System for Near Real-Time Maritime Video-surveillance based on Synchronous Visible Light and Thermal Infrared Video Information Fusion: an Active Contour Approach. *Proceedings of The Ocean and Coastal Observation Sensors and Observing Systems, Numerical Models and Information Systems Conference, 2013*
- **A. CHAN ; V. MAHADEVAN ; N. VASCONCELOS.** Generalized Stauffer-Grimson Background Subtraction for Dynamic Scenes. *Machine Vision and Applications Volume,* 2011, vol. 22 (5), 751-766
- **P.-L. ST-CHARLES ; G.-A. BILODEAU ; R. BERGEVIN.** Flexible background subtraction with self-balanced local sensitivity. *Proceedings of the IEEE Conference on Computer Vision and Pattern Recognition Workshops (CVPRW),* 2014, 414-419
- **P.-L. ST-CHARLES ; G.-A. BILODEAU.** Improving background subtraction using local binary similarity patterns. *Proceedings of the IEEE Winter Conference on Applications of Computer Vision,* 2014, 509-515
- **Z. ZHAO ; T. BOUWMANS ; X. ZHANG ; Y. FANG.** A fuzzy background modeling approach for motion detection in dynamic backgrounds, Multimedia and Signal Processing. *Communications in Computer and Information Science,* vol. 346, 177-185
- **Z. ZIVKOVIC.** Improved adaptive gaussian mixture model for background subtraction. *Proceedings of the International Conference on Pattern Recognition,* 2004, vol. 2, 28-31